# EUROPEAN PATENT SPECIFICATION

(11) **EP 4 473 476 B1**
(45) Date of publication and mention of the grant of the patent: **28.01.2026**
(21) Application number: 22956723.5
(22) Date of filing: 29.08.2022
(51) Int. Cl.: G06V 10/774, G06V 10/80, G06V 10/762, G06V 10/778, G06V 10/82, G06V 20/56, G06N 3/08, G06N 3/045, G06T 7/11

(54) **VISION-BASED PERCEPTION SYSTEM**
SICHTBASIERTES WAHRNEHMUNGSSYSTEM
SYSTÈME DE PERCEPTION BASÉ SUR LA VISION

(43) Date of publication of application: 11.12.2024
(60) Divisional application: 25223143.6
(73) Proprietor: Shenzhen Yinwang Intelligent Technologies Co., Ltd., Shenzhen, Guangdong 518129 (CN)
(72) Inventor: SABATINI, Stefano, 80992 Munich (DE); PIASCO, Nathan, 80992 Munich (DE); BENNEHAR, Moussab, 80992 Munich (DE); QIU, Weichao, Shenzhen, Guangdong 518129 (CN); TSISHKOU, Dzmitry, 80992 Munich (DE)
(74) Representative: MERH-IP Matias Erny Reichl Hoffmann Patentanwälte PartG mbB
(86) International application number: PCT/CN2022/115508
(87) International publication number: WO 2024/044887

(56) References cited:
- CN-A- 110 363 820
- CN-A- 112 602 091
- CN-A- 112 639 819
- CN-A- 112 861 653
- CN-A- 113 269 040
- CN-A- 114 549 610
- CN-A- 114 862 907
- DE-A1- 102021 002 798
- US-A1- 2021 103 027
- DANIEL BOGDOLL ET AL: "Multimodal Detection of Unknown Objects on Roads for Autonomous Driving", ARXIV.ORG, CORNELL UNIVERSITY LIBRARY, 201 OLIN LIBRARY CORNELL UNIVERSITY ITHACA, NY 14853, 3 May 2022 (2022-05-03), XP091220174
- XIE CHRISTOPHER ET AL: "FiG-NeRF: Figure-Ground Neural Radiance Fields for 3D Object Category Modelling", 2021 INTERNATIONAL CONFERENCE ON 3D VISION (3DV), IEEE, 1 December 2021 (2021-12-01), pages 962 - 971, XP033999219, DOI: 10.1109/3DV53792.2021.00104
- NAIFAN LI ET AL: "Traffic Context Aware Data Augmentation for Rare Object Detection in Autonomous Driving", ARXIV.ORG, CORNELL UNIVERSITY LIBRARY, 201 OLIN LIBRARY CORNELL UNIVERSITY ITHACA, NY 14853, 1 May 2022 (2022-05-01), XP091219317
- JINYANG YUAN ET AL: "Compositional Scene Representation Learning via Reconstruction: A Survey", ARXIV.ORG, CORNELL UNIVERSITY LIBRARY, 201 OLIN LIBRARY CORNELL UNIVERSITY ITHACA, NY 14853, 3 June 2022 (2022-06-03), XP091238178

## Description

### TECHNICAL FIELD

The present disclosure relates to a vision-based perception system configured for object recognition by means of a neural network, wherein the vision-based perception system comprises a LIDAR device and a camera device.

### BACKGROUND

Vision-based perception systems comprising one or more Light Detection and Ranging, LIDAR, devices configured to obtain a temporal sequence of 3D point cloud data sets for sensed objects and one or more camera devices configured to capture a temporal sequence of 2D images of the objects as well as a processing unit configured to recognize objects are employed in a variety of applications. For example, vehicles as automobiles, Automated Guided Vehicles (AGV) and autonomous mobile robots, can be equipped with such vision-based perception systems to facilitate navigation, localization and obstacle avoidance. In the automotive context, vision-based perception systems can be comprised by Advanced Driver Assistant Systems (ADAS).

Recently, deep learning techniques have been employed for automated object recognition. Deep learning vision-based perception systems used for object recognition are trained by a huge amount of training data and prove to recognize reliably objects belonging to classes of objects including a large number of the objects that are to be recognized. However, deep learning vision-based perception systems of the art tend to fail recognizing objects for which only a few examples are present in the training data sets (rare objects) and cannot recognize unknown (untrained) objects. Therefore, training data sets previously used for training are augmented by training samples representing unrecognized objects. The data augmentation is conventionally achieved by synthetically creating computer graphics assets that are added to the training sets for additional training of the vision-based perception systems (US 2020/0051291 A1, US 9 767 565 B2). However, the computer graphics assets, conventionally, have to be created by experts in a time expensive and laborious manner.

DANIEL BOGDOLL ET AL: "Multimodal Detection of Unknown Objects on Roads for Autonomous Driving", ARXIV.ORG, CORNELL UNIVERSITY LIBRARY, 201 OLIN LIBRARY CORNELL UNIVERSITY ITHACA, NY 14853, 3 May 2022 (2022-05-03), XP091220174 discloses anomaly detection making use of camera and lidar data. Semantic segmentation is applied to the camera image to identify the road. These road pixels are then projected into the lidar space. Next, corner case proposal generation and center point object detection are applied, and clusters without classifications are marked as anomalies, creating an intermediate anomaly proposal. The bounding boxes of those possible anomalies are then mapped onto the 2D camera space. Based on a list of classes deemed normal, those possible anomalies are classified as either an anomaly or one of the non-anomaly classes, producing the final anomaly detection.

XIE CHRISTOPHER ET AL: "FiG-NeRF: Figure-Ground Neural Radiance Fields for 3D Object Category Modelling", 2021 INTERNATIONAL CONFERENCE ON 3D VISION (3DV), IEEE, 1 December 2021 (2021-12-01), pages 962-971, XP033999219, DOI: 10.1109/3DV53792.2021.00104 [retrieved on 2021-12-29] discloses the use of NeRF to learn 3D object category models from collections of input images.

### SUMMARY

In view of the above, it is an objective underlying the present application to provide a vision-based perception system that allows for reliably recognizing rare objects and learning recognition of unknown objects at low costs. It is explicitly stated that in this application *per definitionem* "recognizing objects" covers object recognition and/or object identification.

The foregoing and other objectives are achieved by the subject matter of the independent claims. Further implementation forms are apparent from the dependent claims, the description and the figures.

According to a first aspect, it is provided a (for example, deep learning) vision-based perception system for monitoring a physical environment of the system comprising a Light Detection and Ranging, LIDAR, device configured to obtain a temporal sequence of point cloud data sets representing the environment, a camera device configured to capture a temporal sequence of images of the environment and a processing unit comprising a first neural network and a second neural network different from the first neural network. The processing unit is configured to recognize an object (for example, a plurality of objects) present in the temporal sequence of images by means of the first neural network and determine (detect) an unrecognized object (for example, an unknown/untrained kind of vehicle) present in the temporal sequence of images. Further, the processing unit is configured to determine a bounding box for the determined unrecognized object based on at least one of the point cloud data sets, obtain a neural network representation of the unrecognized object based on the temporal sequence of images and the determined bounding box by means of the second neural network and train the first neural network for recognition of the unrecognized object based on the obtained neural network representation of the unrecognized object.

The processing unit may operate completely automatically or semi-automatically. The neural network representation of the unrecognized object might be obtained without any interaction by a human operator. Usage of the second neural network for obtaining the neural network representation of the unrecognized object and using that neural network representation of the unrecognized object allows for obtaining speedily a plurality of augmented training data sets without the need for time consuming and expensive manual creation of synthetic assets by human experts.

It goes without saying that herein the term "neural network" refers to an artificial neural network. The first neural network may be a deep neural network and it may comprise a fully connected feedforward neural network (Multilayer Perceptron, MLP) or a recurrent or convolutional neural network and/or a transformer. The second neural network is used for obtaining the neural network representation of the unrecognized object and it may be or comprise an MLP, for example, a deep MLP.

According to an implementation, the processing unit of the vision-based perception system is configured to cluster points of each of the point cloud data sets to obtain point clusters for each of the point cloud data sets and determine the unrecognized object by determining that for at least some of the point cloud data sets one of the point clusters does not correspond to any object present in the temporal sequence of images recognized by means of the first neural network. Thus, an unrecognized object can be reliably and speedily determined based on the data provided by the LIDAR device and the camera devices.

According to another implementation, the processing unit of the vision-based perception system is configured to perform ground segmentation based on the point cloud data sets to determine ground and to determine the unrecognized object by determining that that the unrecognized object is located on the determined ground. In particular, the processing unit may be configured to determine the unrecognized object only by both determining that for at least some of the point cloud data sets one of the point clusters does not correspond to any object recognized by means of the first neural network and determining that that the unrecognized object is located on the determined ground. By "ground segmentation" automatic segmentation between some ground on which objects are located and other portions of the images and/or point clouds is meant. The ground segmentation may be performed based on images or based on both the images and LIDAR point clouds. An example of the ground segmentation is road segmentation in the context of automotive applications. Employment of the ground segmentation facilitates reliably determining objects that are not recognized/recognizable in the images captured by the camera devices of the vision-based perception system.

According to another implementation of the vision-based perception system of the first aspect, the processing unit is further configured to determine for each of a plurality of pre-stored images captured by a camera device and corresponding pre-stored LIDAR point cloud data sets captured by a LIDAR device at least one other object with a corresponding bounding box determined by the processing unit based on at least one of the corresponding pre-stored LIDAR point cloud data sets that within predetermined thresholds has the same dimensions as the bounding box determined by the processing unit for the determined unrecognized object and replace the determined at least one other object by the neural network representation of the unrecognized object in each of the plurality of pre-stored images to obtain a plurality of training images for training the first neural network for recognition of the unrecognized object.

The pre-stored images may be captured by the same camera devices of the vision-based perception system of the first aspect and the pre-stored LIDAR point cloud data sets may be captured by the LIDAR device of the vision-based perception system of the first aspect. According to this implementation, objects present in the pre-stored images are replaced by the neural network representation of the unrecognized object in order to create, by means of the second neural network, a huge number of new training images (augmented training data) representing new training scenes suitably usable for training the first neural network for object recognition.

In order to accelerate a training procedure of the first neural network resulting in reliable recognition results, one might suitably take into account illumination and shadowing conditions when creating the training images. Thus, according to another implementation, the processing unit of the vision-based perception system is configured to determine for each of the plurality of pre-stored images captured by the camera device a first light direction (direction of incidence of light) with respect to the at least one other object and determine a second light direction (direction of incidence of light) with respect to the determined unrecognized object and replace the determined at least one other object by the neural network representation of the unrecognized object in each of the plurality of pre-stored images (for example, only) when the first light direction and the second light direction deviate from each other by less than a predetermined lighting (deviation) angle. According to this implementation, an image having the at least one other object illuminated from a light direction that is too different from the one with respect to the determined unrecognized object is not considered suitable enough for serving as a basis for a training image.

According to another implementation, the second neural network of the vision-based perception system comprises a first Multilayer Perceptron, MLP, trained based on the Neural Radiance Field technique and a second MLP trained based on the Neural Radiance Field technique that is different from the first MLP wherein the first MLP is configured to obtain the neural network representation of the unrecognized object and the second MLP is configured to obtain a neural network representation of a background of the unrecognized object.

The Neural Radiance Field (NERF) technique was proposed by B. Mildenhall et al. in a paper, entitled "Nerf: Representing scenes as neural radiance fields for view synthesis" in "Computer Vision - ECCV 2020", 16th European Conference, Glasgow, UK, August 23-28, 2020, Springer, Cham, 2020. NERF allows for efficiently obtaining an accurate neural network representation of the environment and, in particular, the unrecognized object based on color values and spatially-dependent volumetric density values (see also detailed description below).

By means of the NERF trained first and second MLPs an unrecognized object can be automatically isolated from a background without any human interaction. According to an implementation, some ray splitting technique is employed in order to obtain that isolation. In this implementation, the first MLP is configured to obtain the neural network representation of the unrecognized object based on portions of camera rays traversing a region corresponding to the bounding box and the second MLP is configured to obtain the neural network representation of the background of the unrecognized object based on portions of camera rays not traversing the region corresponding to the bounding box. Based on the bounding box obtained from the LIDAR point clouds data a neural network representation of the unrecognized object, on the one hand, and the background of the same, on the other hand, can be automatically and relatively easily obtained based on the individually designed MLPs.

The training images may be obtained by rendering the neural network representation of the unrecognized object into pre-stored images, for example, by re-placing one or more recognized common objects present in the pre-stored images by the unrecognized object. For example, a neural network representation of a scene comprising the one or more recognized objects can be obtained by the first and second NERF trained network neural networks and the determined at least one other object can be replaced by the neural network representation of the rare object. According to an implementation, the first MLP is configured to obtain the neural network representation of the unrecognized object based on a camera pose (of the camera used for capturing the image that includes the unrecognized object) and the processing unit is configured to replace the determined at least one other object by the neural network representation of the unrecognized object by rendering the neural network representation of the unrecognized object into each of the plurality of pre-stored images based on a rendering pose (for example, only with a rendering pose) that deviates from the camera pose by less than a predetermined threshold. Thereby, the position from which the rendering is performed and the direction in which the rendering is performed may be controlled in order to guarantee that artifacts due to positions/directions with respect to the unrecognized object that are not present in the temporal sequence of images of the environment comprising the unrecognized object can be avoided.

The vision-based perception system according to the first aspect and any implementation of the same can be suitably be used in vehicles. Thus, according to another implementation the vision-based perception system is configured to be installed in a vehicle, in particular, an automobile, autonomous mobile robot or Automated Guided Vehicle (AGV), and the temporal sequence of point cloud data sets and the temporal sequence of images represent a driving scene of the vehicle. In automotive applications, the vision-based perception system according to the first aspect and any implementation of the same can be comprised by an Advanced Driver Assistant System (ADAS).

According to a second aspect, it is provided a vehicle comprising the vision-based perception system according to the first aspect or any implementation of the same. The vehicle may be an automobile, an autonomous mobile robot or an Automated Guided Vehicle (AGV).

According to a third aspect, it is provided a method of training for object recognition a first neural network of a vision-based perception system. This method comprises the steps of obtaining a temporal sequence of point cloud data sets by a Light Detection and Ranging, LIDAR, device of the vision-based perception system representing an environment of the vision-based perception system, capturing a temporal sequence of images of the environment by a camera device of the vision-based perception system, determining (detecting) an unrecognized object in the temporal sequence of images by a processing unit of the vision-based perception system, determining a bounding box for the determined unrecognized object based on at least one of the point cloud data sets by the processing unit, obtaining a neural network representation of the unrecognized object based on the temporal sequence of images and the determined bounding box by means of a second neural network of the vision-based perception system and training the first neural network for recognition of the unrecognized object based on the obtained neural network representation of the unrecognized object.

The unrecognized object may, for example, be or comprise a vehicle of an unknown (untrained) brand or type or an unknown object laying on a street or road.

According to an implementation, the method of the third aspect further comprises clustering, by the processing unit, points of each of the point cloud data sets to obtain point clusters for each of the point cloud data sets, wherein the unrecognized object is determined by determining that for at least some of the point cloud data sets one of the point clusters does not correspond to any object recognized by means of the first neural network.

According to another implementation, the method further comprises performing, by the processing unit, ground segmentation (for example, road segmentation) based on the point cloud data sets to determine ground, wherein the unrecognized object is determined by determining that that the unrecognized object is located on the determined ground.

According to another implementation, the method further comprises determining, by the processing unit, for each of a plurality of pre-stored images captured by a camera device (for example, the camera device of the vision-based perception system) and corresponding pre-stored LIDAR point cloud data sets captured by a LIDAR device (for example, the LIDAR device of the vision-based perception system) at least one other object with a corresponding bounding box determined by the processing unit based on at least one of the corresponding pre-stored LIDAR point cloud data sets that within predetermined thresholds has the same dimensions as the bounding box determined by the processing unit for the determined unrecognized object and replacing the determined at least one other object by the neural network representation of the unrecognized object in each of the plurality of pre-stored images to obtain a plurality of training images for training the first neural network for recognition of the unrecognized object.

According to another implementation, the method further comprises determining, by the processing unit, for each of the plurality of pre-stored images captured by the camera device a first light direction with respect to the at least one other object and determining a second light direction with respect to the determined unrecognized object, wherein the determined at least one other object is replaced by the neural network representation of the unrecognized object in each of the plurality of pre-stored images when the first light direction and the second light direction deviate from each other by less than a predetermined lighting (deviation) angle.

According to an implementation, the second neural network comprises a first Multilayer Perceptron, MLP, trained based on the Neural Radiance Field technique and a second MLP trained based on the Neural Radiance Field technique different from the first MLP, and the neural network representation of the unrecognized object is obtained by the first MLP and the method further comprises obtaining a neural network representation of a background of the unrecognized object by the second MLP.

According to another implementation, the neural network representation of the unrecognized object is obtained based on portions of camera rays traversing a region corresponding to the bounding box and the neural network representation of the background of the unrecognized object is obtained based on portions of camera rays not traversing the region corresponding to the bounding box.

According to another implementation, the neural network representation of the unrecognized object is obtained based on a camera pose (of the camera) and the determined at least one other object is replaced by the neural network representation of the unrecognized object by rendering the neural network representation of the unrecognized object into each of the plurality of pre-stored images based on a rendering pose that deviates from the camera pose by less than a predetermined threshold.

According to a fourth aspect, it is provided a method of recognizing an object present in an image that comprises the steps of the method of training for object recognition a first neural network of a vision-based perception system according to the third aspect and the implementations of the same.

The method of training for object recognition a first neural network of a vision-based perception system according to the third aspect and the implementations of the same as well as the method of recognizing an object present in an image according to the fourth aspect provide the same or similar advantages as the ones described above with reference to the vision-based perception system according to the first aspect and the implementations thereof. The vision-based perception system according to the first aspect and the implementations of the same may be configured to perform the method according to the third as well as the implementations thereof as well as the method according to the fourth aspect.

According to a fifth aspect, it is provided a computer program product comprising computer readable instructions for, when run on a computer, performing or controlling the steps of the method according to the third or fourth aspect as well as the implementations thereof.

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:
- Figure 1: illustrates a vision-based perception system according to an embodiment.
- Figure 2: is a flow chart illustrating a method of training for object recognition a first neural network of a vision-based perception system according to an embodiment.
- Figure 3: illustrates data augmentation of training data used by a neural network of a vision-based perception system for object recognition.
- Figure 4: illustrates a ray splitting technique used for synthetic asset creation based on NERF.
- Figure 5: illustrates synthetic asset creation based on NERF.
- Figure 6: illustrates condition of rendering poses suitable for synthetic asset creation based on NERF.
- Figure 7: illustrates replacement of another object present in a pre-stored image by a rare object for synthetic asset creation based on NERF.

### DETAILED DESCRIPTION OF THE EMBODIMENTS

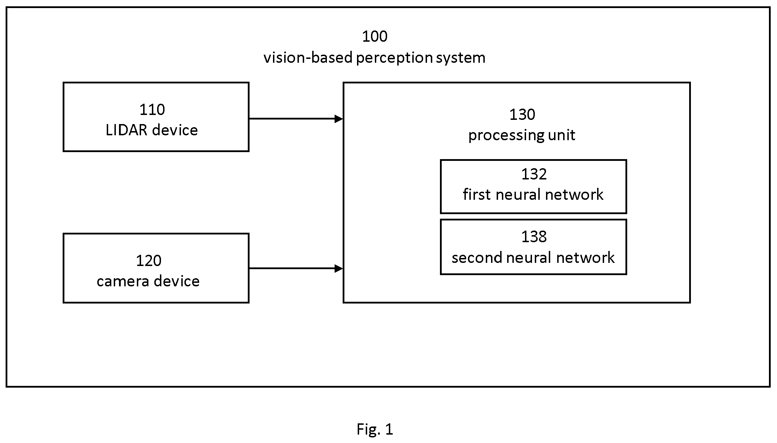

Herein, it is provided a technique for data augmentation of training data sets used for a deep learning vision-based perception system configured for object recognition. An embodiment of a vision-based perception system 100 for monitoring a physical environment of the system wherein such a technique is implemented is illustrated in Figure 1. The vision-based perception system 100 comprises a LIDAR device 110, for example, a plurality of LIDAR devices, and a camera device 120, for example, a plurality of camera devices. Furthermore, the vision-based perception system 100 comprises a processing unit 130 comprising a first neural network 132 and a second neural network 138. The processing unit 130 is configured to receive input data from both the LIDAR device 110 and the camera device 120.

The first neural network 132 may comprise a recurrent or convolutional neural network and/or a transformer and is trained for object recognition. The first neural network 132 is configured to receive input data based on images captured by the camera device 110. The input data may comprise patches of the images. The input data may comprise a tensor with the shape (number of images) x (image width) x (image height) x (image depth). For the first layer of the neural network which process input data the number of input channels may be equal to or larger than the number of channels of data representation, for instance 3 channels for RGB or YUV representation of the images. By passing a neural network layer, the image may become abstracted to a feature map, with shape (number of images) x (feature map width) x (feature map height) x (feature map channels) and further processed. The first neural network 132 may comprise a neural network operating as a classifier. The first neural network 132 may also be configured to receive point cloud data obtained by the LIDAR device 110.

The second neural network 138 is configured to receive input data based on the images captured by the camera device 120. The second neural network 138 may comprise one or more MLPs and may be trained for generating an implicit neural network representation of the environment comprising information on the pose of the camera device. The second neural network 138 may comprise one or more NERF trained neural networks (see description below).

The LIDAR device 110 is configured to obtain a temporal sequence of point cloud data sets representing the environment of the system and the camera device 120 is configured to capture a temporal sequence of images of the environment. The processing unit 130 is configured to recognize an object (for example, a plurality of objects) present in the temporal sequence of images by means of the first neural network and determine (detect) an unrecognized object present in the temporal sequence of images. The unrecognized object may be an object the first neural network was not trained to recognize or an object that was only present in a relatively sparse sub-set of training data.

Further, the processing unit 130 is configured to determine a bounding box for the determined unrecognized object based on at least one of the point cloud data sets and obtain a neural network representation of the unrecognized object based on the temporal sequence of images and the determined bounding box by means of the second neural network.

Furthermore, the processing unit 130 of the vision-based perception system 100 is configured to train the first neural network for recognition of the unrecognized object based on the obtained neural network representation of the unrecognized object. The second neural network 138 is used to create a plurality of new training images each containing the neural network representation of the unrecognized object and the first neural network 132 is trained based on the thus created plurality of new training images (see also description below). Due to the employment of the second neural network 138 an augmented training data set suitable for training the first neural network 132 for recognizing the unrecognized object can be generated without any interaction by a human expert or at least less interaction than needed in the art.

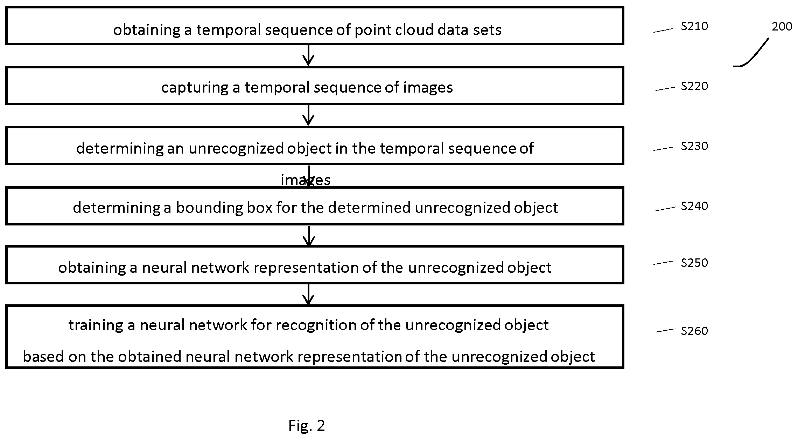

A method 200 of training for object recognition a first neural network of a vision-based perception system according to an embodiment is illustrated by the flow chart shown in Figure 2. The method can be implemented in the vision-based perception system 100 illustrated in Figure 1 and the vision-based perception system 100 illustrated in Figure 1 may be configured to perform one or more steps comprised by the method 200 illustrated by the flow chart shown in Figure 2.

The method 200 comprises the steps of obtaining S210 a temporal sequence of point cloud data sets by a LIDAR device (one or more LIDAR devices) of the vision-based perception system representing an environment of the vision-based perception system and capturing S220 a temporal sequence of images of the environment by a camera device (one more camera devices) of the vision-based perception system. Further, the method 200 comprises determining (detecting) S230 an unrecognized object in the temporal sequence of images by a processing unit of the vision-based perception system, determining S240 a bounding box for the determined unrecognized object based on at least one of the point cloud data sets by the processing unit and obtaining S250 a neural network representation of the unrecognized object based on the temporal sequence of images and the determined bounding box by means of a second neural network of the vision-based perception system.

Furthermore, the method 200 comprises training S260 the first neural network for recognition of the unrecognized object based on the neural network representation of the unrecognized object obtained by means of the second neural network. A plurality of new training images each containing the neural network representation of the unrecognized object is created and used in the training process S260.

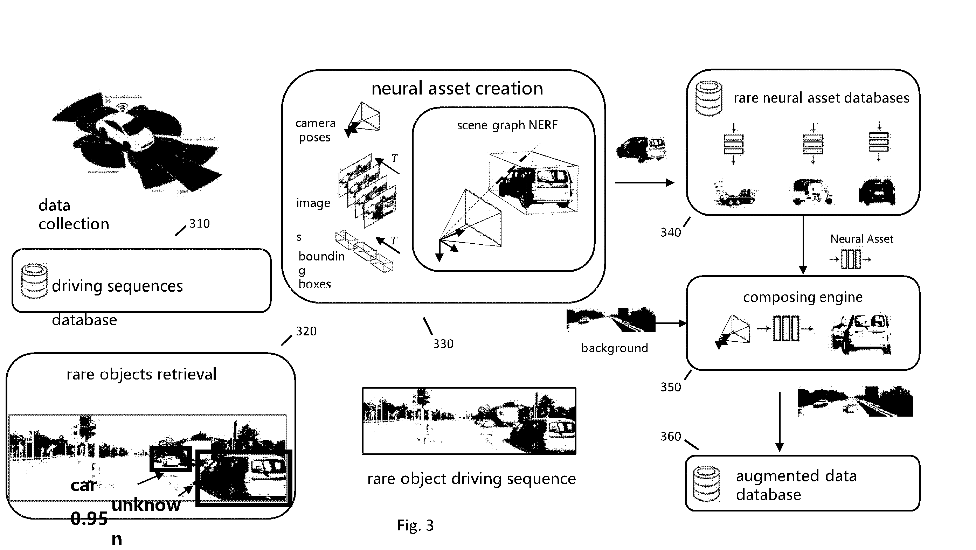

Figure 3 illustrates a procedure of data augmentation 300 of training data used by a neural network of a vision-based perception system configured for object recognition. The data augmentation can be achieved in a fully automated manner or semi-automated manner requiring some human interaction but less human interaction as necessary for synthetic asset creation in the art. In the example, shown the vision-based perception system is installed in an automobile. During a travel of the automobile a driving scene is captured by a LIDAR device and camera devices of the vision-based perception system installed in the automobile. The captured driving scene is stored 310 in a driving scene/sequences database in form of a temporal sequence of point cloud data sets obtained by the LIDAR device and a temporal sequence of images obtained by the camera devices. In a rare object retrieval procedure 320, a rare object (for example, a rare vehicle) that cannot be recognized is automatically determined (detected) and a 3D bounding box corresponding to / containing the object is automatically extracted from the Lidar point clouds. Determination of the 3D bounding box is based on clustering of points of the points clouds and it may be obtained by computing for the obtained 3D points cluster a convex hull. The extracted 3D bounding box is defined by a center position (x, y, z), orientation angles (roll, pitch, yaw) and dimensions (width, length, height).

The determination of an unrecognized object may comprise determining that a particular cluster of points of consecutive point clouds of the temporal sequence of point cloud data sets cannot be associated with any object present in the images that is recognized by means of a neural network comprised in the vision-based perception system. Further, the determination of an unrecognized object may comprise determining that such a particular points cluster is located on a road determined by road segmentation performed for the temporal sequence of point cloud data sets and/or determining that the unrecognized object is located on the road determined by road segmentation.

In a neural (synthetic) asset creation procedure 330, a neural asset is created by means of a NERF (see B. Mildenhall et al. in a paper, entitled "Nerf: Representing scenes as neural radiance fields for view synthesis" in "Computer Vision - ECCV 2020", 16th European Conference, Glasgow, UK, August 23-28, 2020, Springer, Cham, 2020) trained neural network.

Data based on the captured images of the temporal sequence of images obtained by the camera devices and representing the driving scene is input into the NERF trained neural network. The NERF trained neural network learns an implicit neural network representation of the rare object. The input data represents coordinates (x, y, z) of a sampled set of 3D points and the viewing directions (θ, φ) corresponding to the 3D points and the NERF trained neural network outputs view dependent color values (for example RGB) and volumetric density values σ that can be interpreted as the differential probabilities of camera rays terminating at infinitesimal particles at positions (x, y, z (cf. paper by B. Mildenhall et al. cited above). Thus, the MLP realizes F_{Θ}: (x, y, z, θ, φ) → (R, G, B, σ) with optimized weights Θ obtained during the training stage. The output color and volumetric density values are used for volume rendering to obtain a neural network representation of the driving scene captured by the camera devices.

The extracted bounding box is used to "isolate" the rendering of the rare object from rendering the background of the rare object. The rendered "isolated" rare object is a neural network representation of the rare object. By the "isolation" of the rare object based on the extracted bounding box, manual segmentation of the rare object in the images can be avoided such that time, costs and human labor can be significantly reduced as compared to the art.

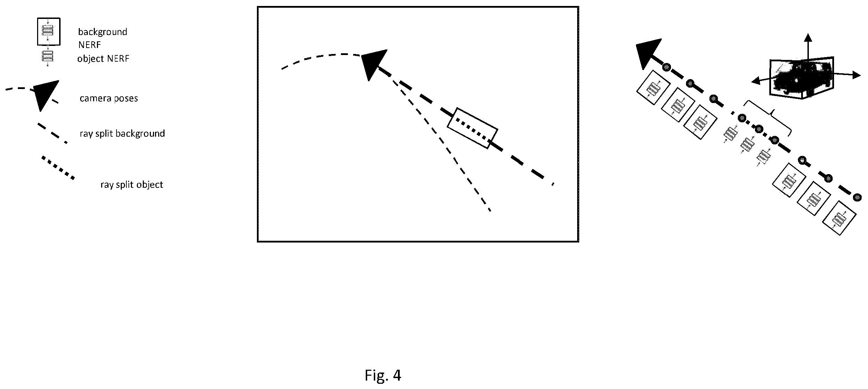

According to an embodiment, the NERF trained neural network comprises a first NERF trained neural network for obtaining a neural network representation of the rare object and a second NERF trained neural network for obtaining a neural network representation of the background of the rare object. Training these two different NERF trained neural networks is based on a camera ray splitting technique illustrated in Figure 4. Similar to the ray marching taught by B. Mildenhall et al. a set of camera rays for a set of camera poses is generated for each of the (training) images of the temporal sequence of images obtained by the camera devices representing the driving scene. As it is shown in Figure 4, first portions of camera rays that traverse the (bounding box of the) determined rare object are distinguished from second portions of the camera rays that do not traverse the (bounding box of the) determined rare object but rather background of the same. The first portions are used for rendering the rare object and the second portions can be used for rendering the background of the same.

The neural network representation of the rare object is stored 340 in a neural asset database. The above-described procedures can be performed for a large variety of rare objects that cannot be recognized based on the available training data used for training the neural network (different from the NERF trained neural network 330) used for object recognition. Thus, a great variety of neural network representations of different rare objects can be stored 340 in the neural asset database.

In a composing procedure 350, a training image is obtained based on a neural asset (a neural network representation of the rare object) and previously stored images captured by one or more camera devices. A previously stored image is selected and the neural network representation of the rare object is rendered into that image thereby obtaining a new training image comprising the rare object. The new training neural network representation can be used to train the neural network used of object recognition. A huge number of pre-stored images can be selected and the rare object can be rendered into each of the huge number of selected pre-stored images (backgrounds) to obtain a huge number of new training images that are stored 360 into an augmented data database thereby obtaining a new rich training data set for training the neural network used for object recognition.

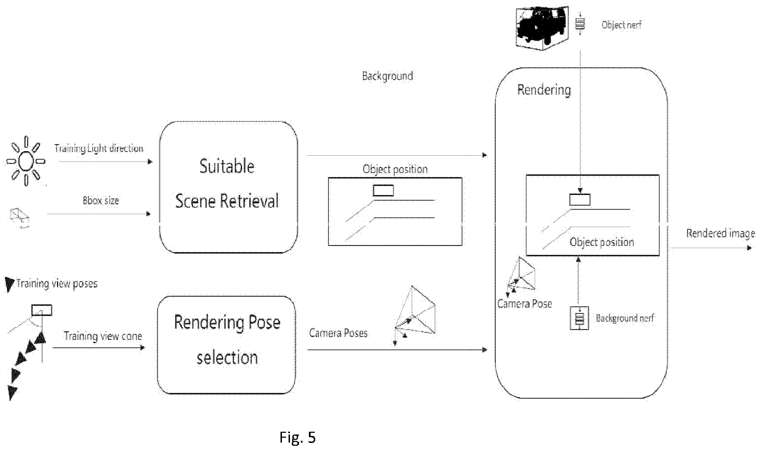

Selection of the previously stored image from a huge amount of pre-stored driving scene images during the composing procedure 350 may comprise a) determining whether another (for example, recognized or recognizable common) object is present in that image that has a corresponding bounding box with the same dimensions within pre-determined thresholds as the rare object and b) whether the light direction with respect to the other object is similar to the one with respect to the rare object within pre-determined limits (see Figure 5). When these conditions are met, i.e., in a scene with a similar bounding box and light direction, the other object can suitably be replaced by the neural asset created for the unrecognized rare object (a minivan in the example shown in Figure 5).

For example, a neural network representation of a scene comprising the other object can be obtained by the first and second NERF trained network neural networks and the other object can be replaced by the neural network representation of the rare object. Taking into account the light direction allows for using coherent/realistic illumination and shadowing in the process of creating training images for augmented data sets by rendering neural network representations in backgrounds of pre-stored images and, thereby, improving/accelerating the training procedure based on the augmented data.

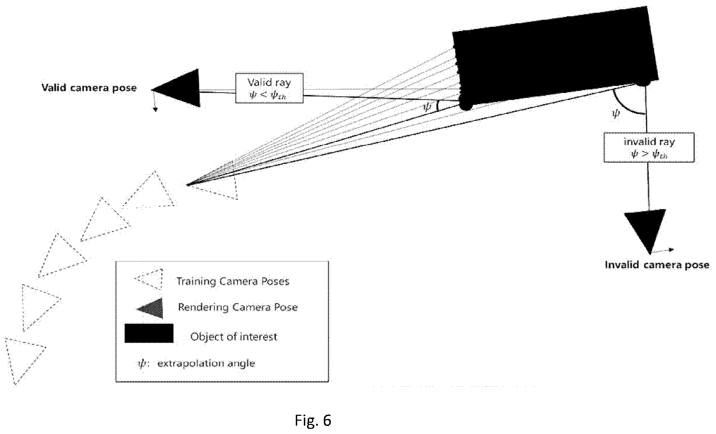

Furthermore, it has to be determined from which position in which (viewing) direction the synthetic image comprising the rare object should be rendered. Creating synthetic images that depict the rare object from positions and in directions very different from the ones used for obtaining the neural network representation of the rare object could result in artifacts that might significantly affect the training procedure based on the augmented data. Thus, according to an embodiment, suitable rendering poses for rendering the desired synthetic images by comparing the rendering poses with poses used to obtain the neural network representation of the rare object are to be determined according to an embodiment (see Figures 5 and 6).

Figure 6 illustrates an example for conditioning the selection of possible rendering poses. An unrecognized rare object is sensed by the camera devices from a number of camera poses during the travel of the automobile wherein the vision-based perception system is installed. In a synthetic image suitable for training recognition of the rare object the rare object should be rendered with an allowed rendering pose. The allowed rendering pose is determined based on the percentage of valid rendering rays characterized by angle deviations with respect to the corresponding camera rays used for obtaining the neural representation of the rare object that do not exceed some predetermined angle deviation threshold. For example, a predetermined angle deviation threshold of 20° to 30° might be considered suitable for valid rendering rays and rendering poses for rendering the rare object in the new synthetic images representing the augmented data for training purposes might be only allowed that are characterized by a percentage of at least 60 % valid rendering rays (see Figure 6). By the selection of allowed poses and suitable lighting conditions for the rendering process a realistic positioning, viewing direction and illumination of the rendered rare object can be achieved.

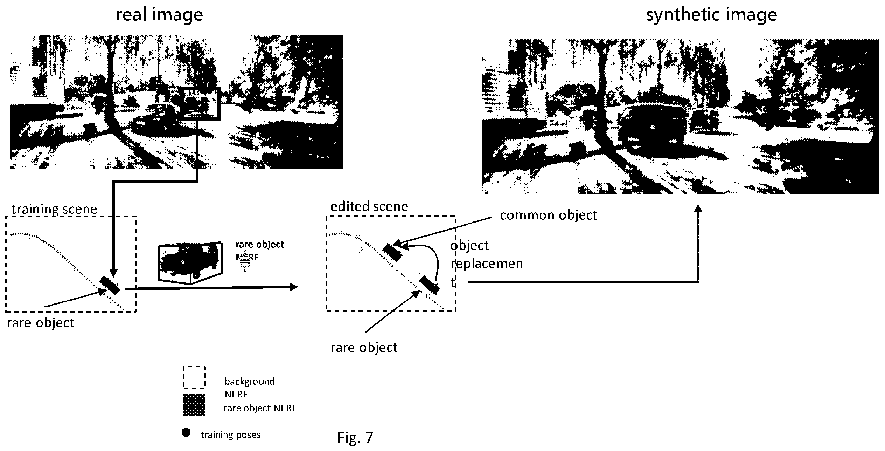

When a pre-stored image comprising another object, for example, a recognizable common object, is considered suitable for the generation of a new synthetic image comprising a neural network representation of a rare object, the other object can be replaced by the neural network representation of the rare object. According to a particular example, the pre-stored image may be the same as a captured image comprising the unrecognized rare object as illustrated in Figure 7. Stored real images captured by one or more camera devices can be transformed into a neural network representation of the captured scene.

The first NERF trained network neural network learns/obtains an implicit neural network representation of the rare object and selects a recognized common object subject to similar lighting conditions that is also present in the scene for replacement by the neural network representation of the rare object for obtaining a new synthetic training image comprising the rare object twice at different positions and with different rendering poses used.

All previously discussed embodiments are not intended as limitations but serve as examples illustrating features and advantages of the invention. It is to be understood that some or all of the above-described features can also be combined in different ways.

## Claims

1. Vision-based perception system (100) for monitoring a physical environment of the system (100) comprising
a Light Detection and Ranging, LIDAR, device (110) configured to obtain a temporal sequence of point cloud data sets representing the environment;
a camera device (120) configured to capture a temporal sequence of images of the environment; and
a processing unit (130) comprising a first neural network (132) and a second neural network (138) different from the first neural network and configured to
recognize an object present in the temporal sequence of images by means of the first neural network (132);
determine an unrecognized object present in the temporal sequence of images;
determine a bounding box for the determined unrecognized object based on at least one of the point cloud data sets;
obtain a neural network representation of the unrecognized object based on the temporal sequence of images and the determined bounding box by means of the second neural network (138);
create, by means of the second neural network (138), training images each including the neural network representation of the unrecognized object; and
train the first neural network (132) for recognition of the unrecognized object based on the obtained training images.

2. The vision-based perception system (100) according to claim 1, wherein the processing unit (130) is configured to
cluster points of each of the point cloud data sets to obtain point clusters for each of the point cloud data sets; and
determine the unrecognized object by determining that for at least some of the point cloud data sets one of the point clusters does not correspond to any object recognized by means of the first neural network (132).

3. The vision-based perception system (100) according to claim 2, wherein the processing unit (130) is configured to perform
ground segmentation based on the point cloud data sets to determine ground; and to determine the unrecognized object by determining that the unrecognized object is located on the determined ground.

4. The vision-based perception system (100) according to one of the preceding claims, wherein
the processing unit (130) is further configured to
determine for each of a plurality of pre-stored images captured by a camera device (120) and corresponding pre-stored LIDAR point cloud data sets captured by a LIDAR device (110) at least one other object with a corresponding bounding box determined by the processing unit (130) based on at least one of the corresponding pre-stored LIDAR point cloud data sets that within predetermined thresholds has the same dimensions as the bounding box determined by the processing unit (130) for the determined unrecognized object; and
replace the determined at least one other object by the neural network representation of the unrecognized object in each of the plurality of pre-stored images to obtain a plurality of training images for training the first neural network (132) for recognition of the unrecognized object: and
wherein the processing unit (130) is, in particular, configured to
determine for each of the plurality of pre-stored images captured by the camera device (120) a first light direction with respect to the at least one other object and determine a second light direction with respect to the determined unrecognized object; and
replace the determined at least one other object by the neural network representation of the unrecognized object in each of the plurality of pre-stored images when the first light direction and the second light direction deviate from each other by less than a predetermined lighting angle.

5. The vision-based perception system (100) according to one of the preceding claims, wherein
the second neural network (138) comprises a first Multilayer Perceptron, MLP, trained based on the Neural Radiance Field technique and a second MLP trained based on the Neural Radiance Field technique different from the first MLP; and
the first MLP is configured to obtain the neural network representation of the unrecognized object and the second MLP is configured to obtain a neural network representation of a background of the unrecognized object; and
wherein
the first MLP is, in particular, configured to obtain the neural network representation of the unrecognized object based on portions of camera rays traversing a region corresponding to the bounding box; and
the second MLP is, in particular, configured to obtain the neural network representation of the background of the unrecognized object based on portions of camera rays not traversing the region corresponding to the bounding box.

6. The vision-based perception system (100) according to claim 5, wherein
the first MLP is configured to obtain the neural network representation of the unrecognized object based on a camera pose; and
the processing unit (130) is configured to replace the determined at least one other object by the neural network representation of the unrecognized object by rendering the neural network representation of the unrecognized object into each of the plurality of pre-stored images based on a rendering pose that deviates from the camera pose by less than a predetermined threshold.

7. The vision-based perception system (100) according to one of the preceding claims, wherein the vision-based perception system (100) is configured to be installed in a vehicle and the temporal sequence of point cloud data sets and the temporal sequence of images represent a driving scene of the vehicle.

8. Method (200) of training for object recognition a first neural network (132) of a vision-based perception system (100), comprising
obtaining (S210) a temporal sequence of point cloud data sets by a Light Detection and Ranging, LIDAR, device of the vision-based perception system (100) representing an environment of the vision-based perception system (100);
capturing (S220) a temporal sequence of images of the environment by a camera device (120) of the vision-based perception system (100);
determining (S230) an unrecognized object in the temporal sequence of images by a processing unit (130) of the vision-based perception system (100);
determining (S240) a bounding box for the determined unrecognized object based on at least one of the point cloud data sets by the processing unit (130);
obtaining (S250) a neural network representation of the unrecognized object based on the temporal sequence of images and the determined bounding box by means of a second neural network (138) of the vision-based perception system (100);
creating, by means of the second neural network (138), training images each including the neural network representation of the unrecognized object; and
training (S260) the first neural network (132) for recognition of the unrecognized object based on the obtained training images.

9. The method (200) according to claim 8, further comprising
clustering, by the processing unit (130), points of each of the point cloud data sets to obtain point clusters for each of the point cloud data sets; and wherein
the unrecognized object is determined (S230) by determining that for at least some of the point cloud data sets one of the point clusters does not correspond to any object recognized by means of the first neural network (132); and in particular, further comprising
performing, by the processing unit (130), ground segmentation based on the point cloud data sets to determine ground; and wherein
the unrecognized object is determined (S230) by determining that the unrecognized object is located on the determined ground.

10. The method (200) according to one of claims 8 to 9, further comprising
determining, by the processing unit (130), for each of a plurality of pre-stored images captured by a camera device (120) and corresponding pre-stored LIDAR point cloud data sets captured by a LIDAR device (110) at least one other object with a corresponding bounding box determined by the processing unit (130) based on at least one of the corresponding pre-stored LIDAR point cloud data sets that within predetermined thresholds has the same dimensions as the bounding box determined by the processing unit (130) for the determined unrecognized object; and
replacing the determined at least one other object by the neural network representation of the unrecognized object in each of the plurality of pre-stored images to obtain a plurality of training images for training the first neural network (132) for recognition of the unrecognized object.

11. The method (200) according to claim 10, further comprising
determining, by the processing unit (130), for each of the plurality of pre-stored images captured by the camera device (120) a first light direction with respect to the at least one other object and determining a second light direction with respect to the determined unrecognized object; and wherein
the determined at least one other object is replaced by the neural network representation of the unrecognized object in each of the plurality of pre-stored images when the first light direction and the second light direction deviate from each other by less than a predetermined lighting angle.

12. The method (200) according to one of the claims 8 to 11, wherein
the second neural network comprises a first Multilayer Perceptron, MLP, trained based on the Neural Radiance Field technique and a second MLP trained based on the Neural Radiance Field technique different from the first MLP; and
the neural network representation of the unrecognized object is obtained (S250) by the first MLP;
and further comprising
obtaining a neural network representation of a background of the unrecognized object by the second MLP.

13. The method (200) according to claim 12, wherein
the neural network representation of the unrecognized object is obtained (S250) based on portions of camera rays traversing a region corresponding to the bounding box; and
the neural network representation of the background of the unrecognized object is obtained based on portions of camera rays not traversing the region corresponding to the bounding box.

14. The method (200) according to claim 12 or 13, wherein
the neural network representation of the unrecognized object is obtained (S250) based on a camera pose; and
the determined at least one other object is replaced by the neural network representation of the unrecognized object by rendering the neural network representation of the unrecognized object into each of the plurality of pre-stored images based on a rendering pose that deviates from the camera pose by less than a predetermined threshold.

15. A computer program product comprising computer readable instructions for, when run on a computer, performing or controlling the steps of the method (200) according to one of the claims 8 to 14.

## Patentansprüche

1. Sichtbasiertes Wahrnehmungssystem (100) zum Überwachen einer physikalischen Umgebung des Systems (100), umfassend
eine Light-Detection-and-Ranging-Vorrichtung, LIDAR-Vorrichtung, (110), die dazu konfiguriert ist, eine zeitliche Abfolge von Punktwolkendatensätzen zu erlangen, welche die Umgebung darstellt;
eine Kameravorrichtung (120), die dazu konfiguriert ist, eine zeitliche Abfolge von Bildern der Umgebung zu erfassen; und
eine Verarbeitungseinheit (130), umfassend ein erstes neuronales Netz (132) und ein zweites neuronales Netz (138), das sich von dem ersten neuronalen Netz unterscheidet, wobei die Verarbeitungseinheit zu Folgendem konfiguriert ist:
Erkennen eines Objekts, das in der zeitlichen Abfolge von Bildern zugegen ist, durch das erste neuronale Netz (132);
Bestimmen eines nicht erkannten Objekts, das in der zeitlichen Abfolge von Bildern zugegen ist;
Bestimmen eines Begrenzungsrahmens für das bestimmte nicht erkannte Objekt basierend auf mindestens einem der Punktwolkendatensätze;
Erlangen einer neuronalen Netzdarstellung des nicht erkannten Objekts basierend auf der zeitlichen Abfolge von Bildern und dem bestimmten Begrenzungsrahmen durch das zweite neuronale Netz (138);
Erzeugen, durch das zweite neuronale Netz (138), von Trainingsbildern, die jeweils die neuronale Netzdarstellung des nicht erkannten Objekts beinhalten; und
Trainieren des ersten neuronalen Netzes (132) auf Erkennen des nicht erkannten Objekts basierend auf den erlangten Trainingsbildern.

2. Sichtbasiertes Wahrnehmungssystem (100) nach Anspruch 1, wobei die Verarbeitungseinheit (130) zu Folgendem konfiguriert ist:
Clustern von Punkten jedes der Punktwolkendatensätze, um Punktcluster für jeden der Punktwolkendatensätze zu erlangen; und
Bestimmen des nicht erkannten Objekts durch Bestimmen, dass für mindestens einige der Punktwolkendatensätze einer der Punktcluster keinem Objekt entspricht, das durch das erste neuronale Netz (132) erkannt wird.

3. Sichtbasiertes Wahrnehmungssystem (100) nach Anspruch 2, wobei die Verarbeitungseinheit (130) dazu konfiguriert ist, eine Grundsegmentierung basierend auf den Punktwolkendatensätzen durchzuführen, um einen Grund zu bestimmen; und
Bestimmen des nicht erkannten Objekts durch Bestimmen, dass sich das nicht erkannte Objekt auf dem bestimmten Grund befindet.

4. Sichtbasiertes Wahrnehmungssystem (100) nach einem der vorhergehenden Ansprüche, wobei
die Verarbeitungseinheit (130) ferner zu Folgendem konfiguriert ist:
Bestimmen für jedes einer Vielzahl vorgespeicherter Bilder, die durch eine Kameravorrichtung (120) erfasst sind, und entsprechender vorgespeicherter LIDAR-Punktwolkendatensätze, die durch eine LIDAR-Vorrichtung (110) erfasst sind, mindestens eines anderen Objekts mit einem entsprechenden Begrenzungsrahmen, der durch die Verarbeitungseinheit (130) basierend auf mindestens einem der entsprechenden vorgespeicherten LIDAR-Punktwolkendatensätze bestimmt wird, der innerhalb vorbestimmter Schwellenwerte die gleichen Abmessungen wie der Begrenzungsrahmen aufweist, der durch die Verarbeitungseinheit (130) für das bestimmte nicht erkannte Objekt bestimmt wird; und
Ersetzen des bestimmten mindestens einen anderen Objekts durch die neuronale Netzdarstellung des nicht erkannten Objekts in jedem der Vielzahl vorgespeicherter Bilder, um eine Vielzahl von Trainingsbildern zum Trainieren des ersten neuronalen Netzes (132) auf Erkennen des nicht erkannten Objekts zu erlangen; und wobei die Verarbeitungseinheit (130) insbesondere zu Folgendem konfiguriert ist:
Bestimmen für jedes der Vielzahl vorgespeicherter Bilder, die durch die Kameravorrichtung (120) erfasst sind, einer ersten Lichtrichtung in Bezug auf das mindestens eine andere Objekt und Bestimmen einer zweiten Lichtrichtung in Bezug auf das bestimmte nicht erkannte Objekt; und
Ersetzen des bestimmten mindestens einen anderen Objekts durch die neuronale Netzdarstellung des nicht erkannten Objekts in jedem der Vielzahl vorgespeicherter Bilder, wenn die erste Lichtrichtung und die zweite Lichtrichtung um weniger als einen vorbestimmten Beleuchtungswinkel voneinander abweichen.

5. Sichtbasiertes Wahrnehmungssystem (100) nach einem der vorhergehenden Ansprüche, wobei
das zweite neuronale Netz (138) ein erstes mehrschichtiges Perzeptron, MLP, das basierend auf der Technik neuronaler Strahlungsfelder trainiert ist, und ein zweites MLP, das basierend auf der Technik neuronaler Strahlungsfelder trainiert ist und sich von dem ersten MLP unterscheidet, umfasst; und
das erste MLP dazu konfiguriert ist, die neuronale Netzdarstellung des nicht erkannten Objekts zu erlangen, und das zweite MLP dazu konfiguriert ist, eine neuronale Netzdarstellung eines Hintergrunds des nicht erkannten Objekts zu erlangen; und wobei
das erste MLP insbesondere dazu konfiguriert ist, die neuronale Netzdarstellung des nicht erkannten Objekts basierend auf Abschnitten von Kamerastrahlen zu erlangen, die einen Bereich, der dem Begrenzungsrahmen entspricht, durchqueren; und
das zweite MLP insbesondere dazu konfiguriert ist, die neuronale Netzdarstellung des Hintergrunds des nicht erkannten Objekts basierend auf Abschnitten von Kamerastrahlen zu erlangen, die den Bereich, der dem Begrenzungsrahmen entspricht, nicht durchqueren.

6. Sichtbasiertes Wahrnehmungssystem (100) nach Anspruch 5, wobei
das erste MLP dazu konfiguriert ist, die neuronale Netzdarstellung des nicht erkannten Objekts basierend auf einer Kameraposition zu erlangen; und
die Verarbeitungseinheit (130) dazu konfiguriert ist, das bestimmte mindestens eine andere Objekt durch die neuronale Netzdarstellung des nicht erkannten Objekts durch Rendern der neuronalen Netzdarstellung des nicht erkannten Objekts in jedes der Vielzahl vorgespeicherter Bilder zu ersetzen, basierend auf einer Rendering-Position, die um weniger als einen vorbestimmten Schwellenwert von der Kameraposition abweicht.

7. Sichtbasiertes Wahrnehmungssystem (100) nach einem der vorhergehenden Ansprüche, wobei das sichtbasierte Wahrnehmungssystem (100) dazu konfiguriert ist, in einem Fahrzeug installiert zu werden, und die zeitliche Abfolge von Punktwolkendatensätzen und die zeitliche Abfolge von Bildern eine Fahrszene des Fahrzeugs darstellen.

8. Verfahren (200) zum Trainieren eines ersten neuronalen Netzes (132) eines sichtbasierten Wahrnehmungssystems (100) auf Objekterkennung, umfassend
Erlangen (S210) einer zeitlichen Abfolge von Punktwolkendatensätzen durch eine Light-Detection-and-Ranging-Vorrichtung, LIDAR-Vorrichtung, des sichtbasierten Wahrnehmungssystems (100), die eine Umgebung des sichtbasierten Wahrnehmungssystems (100) darstellt;
Erfassen (S220) einer zeitlichen Abfolge von Bildern der Umgebung durch eine Kameravorrichtung (120) des sichtbasierten Wahrnehmungssystems (100);
Bestimmen (S230) eines nicht erkannten Objekts in der zeitlichen Abfolge von Bildern durch eine Verarbeitungseinheit (130) des sichtbasierten Wahrnehmungssystems (100);
Bestimmen (S240) eines Begrenzungsrahmens für das bestimmte nicht erkannte Objekt basierend auf mindestens einem der Punktwolkendatensätze durch die Verarbeitungseinheit (130);
Erlangen (S250) einer neuronalen Netzdarstellung des nicht erkannten Objekts basierend auf der zeitlichen Abfolge von Bildern und dem bestimmten Begrenzungsrahmen durch ein zweites neuronales Netz (138) des sichtbasierten Wahrnehmungssystems (100);
Erzeugen, durch das zweite neuronale Netz (138), von Trainingsbildern, die jeweils die neuronale Netzdarstellung des nicht erkannten Objekts beinhalten; und
Trainieren (S260) des ersten neuronalen Netzes (132) auf Erkennen des nicht erkannten Objekts basierend auf den erlangten Trainingsbildern.

9. Verfahren (200) nach Anspruch 8, ferner umfassend
Clustern, durch die Verarbeitungseinheit (130), von Punkten jedes der Punktwolkendatensätze, um Punktcluster für jeden der Punktwolkendatensätze zu erlangen; und wobei
das nicht erkannte Objekt durch Bestimmen bestimmt (S230) wird, dass für mindestens einige der Punktwolkendatensätze einer der Punktcluster keinem Objekt entspricht, das durch das erste neuronale Netz (132) erkannt wird; und
insbesondere ferner umfassend
Durchführen, durch die Verarbeitungseinheit (130), einer Grundsegmentierung basierend auf den Punktwolkendatensätzen, um einen Grund zu bestimmen; und wobei
das nicht erkannte Objekt durch Bestimmen bestimmt (S230) wird, dass sich das nicht erkannte Objekt auf dem bestimmten Grund befindet.

10. Verfahren (200) nach einem der Ansprüche 8 bis 9, ferner umfassend
Bestimmen, durch die Verarbeitungseinheit (130), für jedes einer Vielzahl vorgespeicherter Bilder, die durch eine Kameravorrichtung (120) erfasst sind, und entsprechender vorgespeicherter LIDAR-Punktwolkendatensätze, die durch eine LIDAR-Vorrichtung (110) erfasst sind, mindestens eines anderen Objekts mit einem entsprechenden Begrenzungsrahmen, der durch die Verarbeitungseinheit (130) basierend auf mindestens einem der entsprechenden vorgespeicherten LIDAR-Punktwolkendatensätze bestimmt wird, der innerhalb vorbestimmter Schwellenwerte die gleichen Abmessungen wie der Begrenzungsrahmen aufweist, der durch die Verarbeitungseinheit (130) für das bestimmte nicht erkannte Objekt bestimmt wird; und
Ersetzen des bestimmten mindestens einen anderen Objekts durch die neuronale Netzdarstellung des nicht erkannten Objekts in jedem der Vielzahl vorgespeicherter Bilder, um eine Vielzahl von Trainingsbildern zum Trainieren des ersten neuronalen Netzes (132) auf Erkennen des nicht erkannten Objekts zu erlangen.

11. Verfahren (200) nach Anspruch 10, ferner umfassend
Bestimmen, durch die Verarbeitungseinheit (130), für jedes der Vielzahl vorgespeicherter Bilder, die durch die Kameravorrichtung (120) erfasst sind, einer ersten Lichtrichtung in Bezug auf das mindestens eine andere Objekt und Bestimmen einer zweiten Lichtrichtung in Bezug auf das bestimmte nicht erkannte Objekt; und wobei
das bestimmte mindestens eine andere Objekt durch die neuronale Netzdarstellung des nicht erkannten Objekts in jedem der Vielzahl vorgespeicherter Bilder ersetzt wird, wenn die erste Lichtrichtung und die zweite Lichtrichtung um weniger als einen vorbestimmten Beleuchtungswinkel voneinander abweichen.

12. Verfahren (200) nach einem der Ansprüche 8 bis 11, wobei
das zweite neuronale Netz ein erstes mehrschichtiges Perzeptron, MLP, das basierend auf der Technik neuronaler Strahlungsfelder trainiert ist, und ein zweites MLP, das basierend auf der Technik neuronaler Strahlungsfelder trainiert ist und sich von dem ersten MLP unterscheidet, umfasst; und
die neuronale Netzdarstellung des nicht erkannten Objekts durch das erste MLP erlangt (S250) wird;
und ferner umfassend
Erlangen einer neuronalen Netzdarstellung eines Hintergrunds des nicht erkannten Objekts durch das zweite MLP.

13. Verfahren (200) nach Anspruch 12, wobei
die neuronale Netzdarstellung des nicht erkannten Objekts basierend auf Abschnitten von Kamerastrahlen erlangt (S250) wird, die einen Bereich, der dem Begrenzungsrahmen entspricht, durchqueren; und
die neuronale Netzdarstellung des Hintergrunds des nicht erkannten Objekts basierend auf Abschnitten von Kamerastrahlen erlangt wird, die den Bereich, der dem Begrenzungsrahmen entspricht, nicht durchqueren.

14. Verfahren (200) nach Anspruch 12 oder 13, wobei
die neuronale Netzdarstellung des nicht erkannten Objekts basierend auf einer Kameraposition erlangt (S250) wird; und
das bestimmte mindestens eine andere Objekt durch die neuronale Netzdarstellung des nicht erkannten Objekts durch Rendern der neuronalen Netzdarstellung des nicht erkannten Objekts in jedes der Vielzahl vorgespeicherter Bilder ersetzt wird, basierend auf einer Rendering-Position, die um weniger als einen vorbestimmten Schwellenwert von der Kameraposition abweicht.

15. Computerprogrammprodukt, umfassend computerlesbare Anweisungen, um, wenn sie auf einem Computer ausgeführt werden, die Schritte des Verfahrens (200) nach einem der Ansprüche 8 bis 14 durchzuführen oder zu steuern.

## Revendications

1. Système de perception basé sur la vision (100) pour la surveillance d'un environnement physique du système (100) comprenant
un dispositif de détection et d'estimation de la distance par la lumière, LIDAR (110) configuré pour obtenir une séquence temporelle d'ensembles de données de nuages de points représentant l'environnement ;
un dispositif de caméra (120) configuré pour capturer une séquence temporelle d'images de l'environnement ; et
une unité de traitement (130) comprenant un premier réseau neuronal (132) et un second réseau neuronal (138) différent du premier réseau neuronal et configuré pour
reconnaître un objet présent dans la séquence temporelle d'images au moyen du premier réseau neuronal (132) ;
déterminer un objet non reconnu présent dans la séquence temporelle d'images ;
déterminer une boîte de délimitation pour l'objet non reconnu déterminé sur la base d'au moins l'un des ensembles de données de nuage de points ;
obtenir une représentation de réseau neuronal de l'objet non reconnu sur la base de la séquence temporelle d'images et de la boîte de délimitation déterminée au moyen du second réseau neuronal (138) ;
créer, au moyen du second réseau neuronal (138), d'images d'entraînement comportant chacune la représentation de réseau neuronal de l'objet non reconnu ; et
entraîner le premier réseau neuronal (132) pour la reconnaissance de l'objet non reconnu sur la base des images d'entraînement obtenues.

2. Système de perception basé sur la vision (100) selon la revendication 1, dans lequel l'unité de traitement (130) est configurée pour
regrouper des points de chacun des ensembles de données de nuages de points pour obtenir des groupes de points pour chacun des ensembles de données de nuages de points ; et
déterminer l'objet non reconnu en déterminant que pour au moins certains des ensembles de données de nuage de points l'un des groupes de points ne correspond à aucun objet reconnu au moyen du premier réseau neuronal (132).

3. Système de perception basé sur la vision (100) selon la revendication 2, dans lequel l'unité de traitement (130) est configurée pour réaliser une segmentation du sol sur la base des ensembles de données de nuages de points pour déterminer le sol ; et
pour déterminer l'objet non reconnu en déterminant que l'objet non reconnu est situé sur le sol déterminé.

4. Système de perception basé sur la vision (100) selon l'une des revendications précédentes, dans lequel
l'unité de traitement (130) est également configurée pour
déterminer pour chacune d'une pluralité d'images préenregistrées capturées par un dispositif de caméra (120) et d'ensembles de données de nuage de points LIDAR préenregistrés correspondants capturés par un dispositif LIDAR (110) au moins un autre objet avec une boîte de délimitation correspondante déterminée par l'unité de traitement (130) sur la base d'au moins l'un des ensembles de données de nuage de points LIDAR préenregistrés correspondants qui dans les limites de seuils prédéterminés a les mêmes dimensions que la boîte de délimitation déterminée par l'unité de traitement (130) pour l'objet non reconnu déterminé ; et
remplacer l'au moins un autre objet déterminé par la représentation de réseau neuronal de l'objet non reconnu dans chacune de la pluralité d'images préenregistrées pour obtenir une pluralité d'images d'entraînement pour l'entraînement du premier réseau neuronal (132) pour la reconnaissance de l'objet non reconnu : et
dans lequel l'unité de traitement (130) est, en particulier, configurée pour
déterminer pour chacune de la pluralité d'images préenregistrées capturées par le dispositif de caméra (120) une première direction de lumière par rapport à l'au moins un autre objet et déterminer une seconde direction de lumière par rapport à l'objet non reconnu déterminé ; et
remplacer l'au moins un autre objet déterminé par la représentation de réseau neuronal de l'objet non reconnu dans chacune de la pluralité d'images préenregistrées lorsque la première direction de lumière et la seconde direction de lumière s'écartent l'une de l'autre de moins d'un angle d'éclairage prédéterminé.

5. Système de perception basé sur la vision (100) selon l'une des revendications précédentes, dans lequel
le second réseau neuronal (138) comprend un premier perceptron multicouche, MLP, entraîné sur la base de la technique du champ de rayonnement neuronal et un second MLP entraîné sur la base de la technique du champ de rayonnement neuronal différent du premier MLP ; et
le premier MLP est configuré pour obtenir la représentation de réseau neuronal de l'objet non reconnu et le second MLP est configuré pour obtenir une représentation de réseau neuronal d'un arrière-plan de l'objet non reconnu ; et
dans lequel
le premier MLP est, en particulier, configuré pour obtenir la représentation de réseau neuronal de l'objet non reconnu sur la base de portions de rayons de caméra traversant une région correspondant à la boîte de délimitation ; et
le second MLP est, en particulier, configuré pour obtenir la représentation de réseau neuronal de l'arrière-plan de l'objet non reconnu sur la base de portions de rayons de caméra ne traversant pas la région correspondant à la boîte de délimitation.

6. Système de perception basé sur la vision (100) selon la revendication 5, dans lequel
le premier MLP est configuré pour obtenir la représentation de réseau neuronal de l'objet non reconnu sur la base d'une pose de caméra ; et
l'unité de traitement (130) est configurée pour remplacer l'au moins un autre objet déterminé par la représentation de réseau neuronal de l'objet non reconnu en rendant la représentation de réseau neuronal de l'objet non reconnu dans chacune de la pluralité d'images préenregistrées sur la base d'une pose de rendu qui s'écarte de la pose de la caméra de moins d'un seuil prédéterminé.

7. Système de perception basé sur la vision (100) selon l'une des revendications précédentes, dans lequel le système de perception basé sur la vision (100) est configuré pour être installé dans un véhicule et la séquence temporelle d'ensembles de données de nuage de points et la séquence temporelle d'images représentent une scène de conduite du véhicule.

8. Procédé (200) d'entraînement pour la reconnaissance d'objets d'un premier réseau neuronal (132) d'un système de perception basé sur la vision (100), comprenant
l'obtention (S210) d'une séquence temporelle d'ensembles de données de nuages de points par un dispositif de détection et d'estimation de la distance par la lumière, LIDAR, du système de perception basé sur la vision (100) représentant un environnement du système de perception basé sur la vision (100) ;
la capture (S220) d'une séquence temporelle d'images de l'environnement par un dispositif de caméra (120) du système de perception basé sur la vision (100) ;
la détermination (S230) d'un objet non reconnu dans la séquence temporelle d'images par une unité de traitement (130) du système de perception basé sur la vision (100) ;
la détermination (S240) d'une boîte de délimitation pour l'objet non reconnu déterminé sur la base d'au moins l'un des ensembles de données de nuage de points par l'unité de traitement (130) ; l'obtention (S250) d'une représentation de réseau neuronal de l'objet non reconnu sur la base de la séquence temporelle d'images et de la boîte de délimitation déterminée au moyen d'un second réseau neuronal (138) du système de perception basé sur la vision (100) ;
la création, au moyen du second réseau neuronal (138), d'images d'entraînement comportant chacune la représentation de réseau neuronal de l'objet non reconnu ; et
l'entraînement (S260) du premier réseau neuronal (132) pour la reconnaissance de l'objet non reconnu sur la base des images d'entraînement obtenues.

9. Procédé (200) selon la revendication 8, comprenant également le regroupement, par l'unité de traitement (130), de points de chacun des ensembles de données de nuages de points pour obtenir des groupes de points pour chacun des ensembles de données de nuages de points ; et dans lequel
l'objet non reconnu est déterminé (S230) en déterminant que pour au moins certains des ensembles de données de nuage de points l'un des groupes de points ne correspond à aucun objet reconnu au moyen du premier réseau neuronal (132) ; et
en particulier, comprenant également
la réalisation, par l'unité de traitement (130), d'une segmentation du sol sur la base des ensembles de données de nuage de points pour déterminer le sol ; et dans lequel
l'objet non reconnu est déterminé (S230) en déterminant que l'objet non reconnu est situé sur le sol déterminé.

10. Procédé (200) selon l'une quelconque des revendications 8 et 9, comprenant également
la détermination, par l'unité de traitement (130), pour chacune d'une pluralité d'images préenregistrées capturées par un dispositif de caméra (120) et d'ensembles de données de nuage de points LIDAR préenregistrés correspondants capturés par un dispositif LIDAR (110) d'au moins un autre objet avec une boîte de délimitation correspondante déterminée par l'unité de traitement (130) sur la base d'au moins l'un des ensembles de données de nuage de points LIDAR préenregistrés correspondants qui dans les limites de seuils prédéterminés a les mêmes dimensions que la boîte de délimitation déterminée par l'unité de traitement (130) pour l'objet non reconnu déterminé ; et
le remplacement de l'au moins un autre objet déterminé par la représentation de réseau neuronal de l'objet non reconnu dans chacune de la pluralité d'images préenregistrées pour obtenir une pluralité d'images d'entraînement pour l'entraînement du premier réseau neuronal (132) pour la reconnaissance de l'objet non reconnu.

11. Procédé (200) selon la revendication 10, comprenant également
la détermination, par l'unité de traitement (130), pour chacune de la pluralité d'images préenregistrées capturées par le dispositif de caméra (120) d'une première direction de lumière par rapport à l'au moins un autre objet et la détermination d'une seconde direction de lumière par rapport à l'objet non reconnu déterminé ; et dans lequel
l'au moins un autre objet déterminé est remplacé par la représentation de réseau neuronal de l'objet non reconnu dans chacune de la pluralité d'images préenregistrées lorsque la première direction de lumière et la seconde direction de lumière s'écartent l'une de l'autre de moins d'un angle d'éclairage prédéterminé.

12. Procédé (200) selon l'une des revendications 8 à 11, dans lequel
le second réseau neuronal comprend un premier perceptron multicouche, MLP, entraîné sur la base de la technique du champ de rayonnement neuronal et un second MLP entraîné sur la base de la technique du champ de rayonnement neuronal différent du premier MLP ; et
la représentation de réseau neuronal de l'objet non reconnu est obtenue (S250) par le premier MLP ;
et comprenant également
l'obtention d'une représentation de réseau neuronal d'un arrière-plan de l'objet non reconnu par le second MLP.

13. Procédé (200) selon la revendication 12, dans lequel
la représentation de réseau neuronal de l'objet non reconnu est obtenue (S250) sur la base de portions de rayons de caméra traversant une région correspondant à la boîte de délimitation ; et
la représentation de réseau neuronal de l'arrière-plan de l'objet non reconnu est obtenue sur la base de portions de rayons de caméra ne traversant pas la région correspondant à la boîte de délimitation.

14. Procédé (200) selon la revendication 12 ou 13, dans lequel la représentation de réseau neuronal de l'objet non reconnu est obtenue (S250) sur la base d'une pose de caméra ; et
l'au moins un autre objet déterminé est remplacé par la représentation de réseau neuronal de l'objet non reconnu en rendant la représentation de réseau neuronal de l'objet non reconnu dans chacune de la pluralité d'images préenregistrées sur la base d'une pose de rendu qui s'écarte de la pose de la caméra de moins d'un seuil prédéterminé.

15. Produit de programme informatique comprenant des instructions lisibles par ordinateur pour, lorsqu'elles fonctionnent sur un ordinateur, réaliser ou commander les étapes du procédé (200) selon l'une des revendications 8 à 14.
